(19) Europäisches Patentamt
European Patent Office
Office européen des brevets

(11) **EP 2 023 156 A2**

(12) **EUROPEAN PATENT APPLICATION**

(43) Date of publication:
**11.02.2009 Bulletin 2009/07**

(21) Application number: **08159851.8**

(22) Date of filing: **07.07.2008**

(51) Int Cl.:
*G01S 13/48* (2006.01)   *G01S 13/93* (2006.01)
*G01S 7/02* (2006.01)   *G01S 13/02* (2006.01)
*G01S 13/10* (2006.01)   *G01S 17/10* (2006.01)
*G01S 17/46* (2006.01)   *G01S 17/93* (2006.01)
G01S 7/02 (2006.01)   G01S 13/02 (2006.01)
G01S 13/10 (2006.01)   G01S 17/10 (2006.01)
G01S 17/46 (2006.01)   G01S 17/93 (2006.01)

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **26.07.2007 JP 2007194202**

(71) Applicant: **Omron Corporation
Kyoto-shi, Kyoto 600-8530 (JP)**

(72) Inventor: **Yokoyama, Toru
Kyoto-shi Kyoto 600-8530 (JP)**

(74) Representative: **Wilhelms · Kilian & Partner
Patentanwälte
Eduard-Schmid-Strasse 2
81541 München (DE)**

(54) **Detection apparatus and method**

(57)   A simple and accurate direction detecting technique is to be provided. A speed/distance sensor 1 detects, as a distance R1, a straight-line distance between itself and a target 3 and also detects, as a speed V1, a relative speed of the target 3 with respect to its own position. A speed sensor 2 detects, as a speed V2, a relative speed of the target 3 with respect to its own position. Incorporating the speed/distance sensor 1 and the speed sensor 2, a detection apparatus calculates (part of) a distance R, a distance RR, and an angle θ3 using the distance R1 and the speeds V1 and V2 as parameter values, outputs the angle θ3 as a direction of the target, and outputs the distance R or RR as a distance of the target. The invention can be applied to a direction detecting technique using a laser radar.

FIG. 1

EP 2 023 156 A2

**Description**

BACKGROUND OF THE INVENTION

1. Technical Field

The present invention relates to a detection apparatus and method. More particularly, the invention relates to a detection apparatus and method for detecting the direction of a target.

2. Description of Related Art

Radar sensors are known as detection apparatus for detecting a target ahead. Radar sensors can detect the distance to and the speed of a target.

Furthermore, in recent years, a technique of detecting the direction of a target using a radar sensor (hereinafter referred to as "direction detecting technique") has been being studied and developed.

For example, there are techniques in which the transmitting direction or the receiving direction or both of an electromagnetic wave are varied by a mechanical or electronic method and the direction of a target is detected from a radiation direction or a receiving direction of a radar sensor that is obtained when a reflection signal from the target is large.

As another example, there is a direction detecting technique in which the direction of a target is detected by electronically varying the directivity by a phased array technique. That is, there is a direction detecting technique in which transmission and reception are performed via plural antennas by distributing the output of a radar sensor and varying the input and output phases of respective components and a target existing in a phase-coincident direction is found.

As a further example, JP-A-2006-125947 (Patent Document 1) discloses a direction detecting technique in which two radar sensors having a distance detecting function are combined together and the direction of a target is detected on the basis of distances detected by the two radar sensors.

In recent years, it has come to be desired to realize a simple and accurate direction detecting technique. However, it is difficult for the above conventional direction detecting techniques to satisfy such a desire.

For example, in the direction detecting technique of varying the transmitting direction or receiving direction, a long-term operation may cause a malfunction due to abrasion or deformation in movable portions. Furthermore, the size of an apparatus tends to be increased because mechanical components are necessary.

For example, in the direction detecting technique using the phased array technique, it is unavoidable that the circuit scale and the attachment surface area become large for reasons that a phase shifting circuit section is necessary and plural antennas need to be arranged at regular intervals.

In these techniques, systems and apparatus are increased in complexity and price.

SUMMARY OF THE INVENTION

The present invention has been made in view of the above circumstances, and an object of the invention is therefore to realize a simple direction detecting technique.

A detection apparatus according to one aspect of the invention comprises first speed detecting means for detecting, as a first speed, a relative speed of a target with respect to a first position; second speed detecting means for detecting, as a second speed, a relative speed of the target with respect to a second position; distance detecting means for detecting a distance between the first position and the target; and direction detecting means for detecting a direction of the target with respect to the detection apparatus using trigonometry or trigonometric functions and parameter values that are the first speed detected by the first speed detecting means, the second speed detected by the second speed detecting means, and the distance detected by the distance detecting means.

This makes it possible to realize a direction detecting technique which is simple and accurate.

For example, the first speed detecting means and the second speed detecting means are separate radar sensors having a speed detecting function. For example, the distance detecting means is part of the same radar sensor as the first speed detecting means is, that is, it is part of a radar sensor having a speed detecting function and a distance detecting function. Alternatively, the distance detecting means is a radar sensor which is separate from the first speed detecting means and the second speed detecting means, that is, a radar sensor having a distance detecting function.

For example, the direction detecting means is a circuit which performs signal processing or a computer which performs software signal processing.

The detection of a direction using trigonometry or trigonometric functions means detecting a direction of the target by calculating its angle or azimuth by applying theorems and formulae of trigonometry, trigonometric functions, geometry, etc. to the triangle that is formed by the first position, the second position, and the position of the target.

The direction detecting means may detect, as the direction of the target, an angle formed by a first line segment connecting the first position and the second position and a second line segment connecting the target and a middle point of the first line segment.

This makes it possible to detect a direction of a target by using an even simpler calculation technique. That is, where the direction detecting means is a circuit, its circuit scale can be reduced. Where direction detecting means is a computer which executes software, the scale of the software can be reduced.

The direction detecting means may further detects, as a distance between the detection apparatus and the target, a length of a perpendicular from the target to the first line segment or a length of the second line segment.

This makes it possible to output, to the outside, not only a direction of a target but also its distance.

The first speed detecting means and the distance detecting means may be one radar sensor and the second speed detecting means may be another radar sensor.

This makes it possible to realize the entire detection apparatus as one having a simpler configuration.

A detection method according to another aspect of the invention is a detection method of a detection apparatus for detecting a target, and comprises the steps of detecting, as a first speed, a relative speed of the target with respect to a first position; detecting, as a second speed, a relative speed of the target with respect to a second position; detecting a distance between the first position and the target; and detecting a direction of the target with respect to the detection apparatus using trigonometry or trigonometric functions and parameter values that are the detected first speed, the detected second speed, and the detected distance.

As described above, the invention can provide a direction detecting technique that enables detection of the direction of a target ahead. The invention can also realize such a direction detecting technique which is simple.

BRIEF DESCRIPTION OF THE DRAWINGS

Fig. 1 illustrates a technique to which the present invention is applied.

Fig. 2 is a block diagram showing the configuration of an embodiment of a detection apparatus to which the invention is applied.

Fig. 3 is a block diagram showing a detailed example configuration of a speed/distance sensor of the detection apparatus of Fig. 1.

Fig. 4 is a block diagram showing a detailed example configuration of a speed sensor of the detection apparatus of Fig. 1.

Fig. 5 is a block diagram showing a detailed example configuration of a calculation section of the detection apparatus of Fig. 1.

Fig. 6 shows an example output signal of a distribution section shown in Fig. 3.

Fig. 7 shows an example output signal of a pulse oscillation section shown in Fig. 3.

Fig. 8 shows an example output signal of a modulation section shown in Fig. 3.

Fig. 9 is a timing chart illustrating an example operation of the speed/distance sensor of Fig. 3.

Fig. 10 shows example output signals of a mixing section shown in Fig. 3.

Fig. 11 illustrates a conventional detection apparatus.

Fig. 12 illustrates another embodiment of the detection apparatus to which the invention is applied.

DESCRIPTION OF PREFERRED EMBODIMENTS

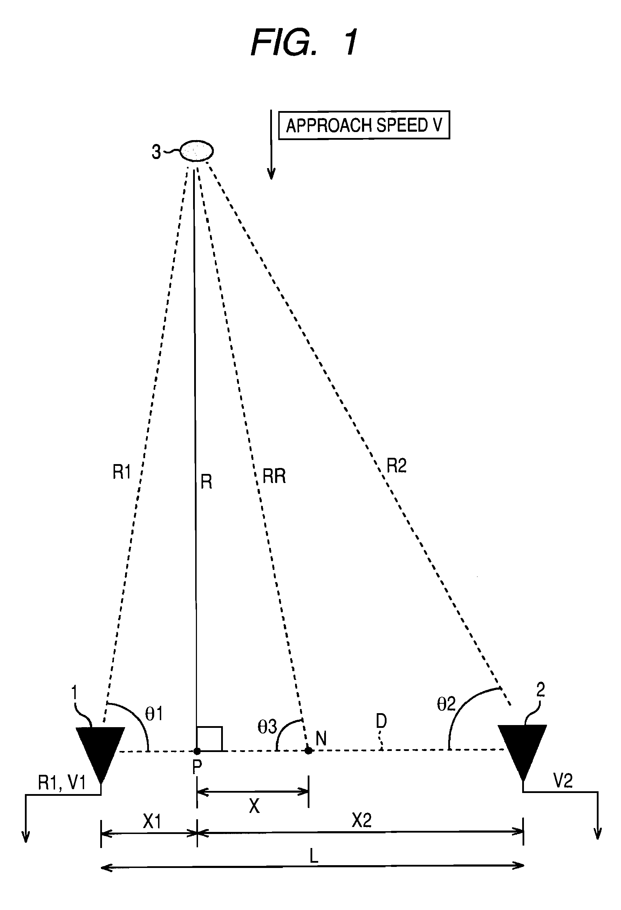

First, a technique to which the present invention is applied (hereinafter referred simply as "technique of the invention") will be described with reference to Fig. 1.

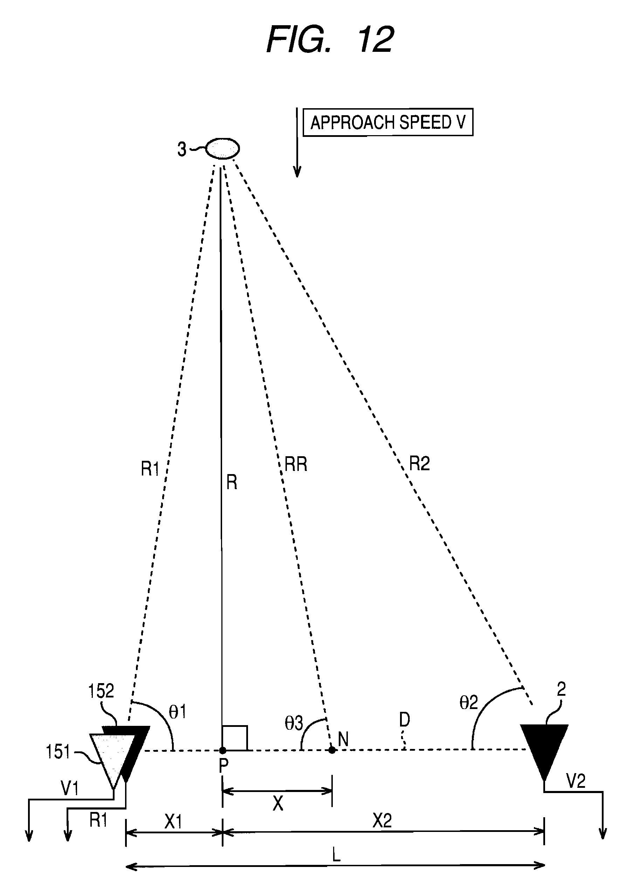

As shown in Fig. 1, for example, to detect the direction of a target 3, the technique of the invention uses sensors 1 and 2 which are disposed so as to have a distance L. The term "for example" is used above because the technique of the invention is applicable to other cases such as a case of Fig. 12 (described later).

For example, the sensors 1 and 2 are installed on the front bumper of an automobile o the like at right and left positions. The thus-installed sensors 1 and 2 can detect the azimuth, distance, relative speed, etc. of the target 3 which is an automobile or a stationary object ahead. A vehicle control for collision prevention, constant inter-vehicle distance follow running, or the like is performed on the basis of such detection information. The above statement is just an example and the installation locations of the sensors 1 and 2 are not limited to particular locations. The vehicle control is not limited to the above ones, either.

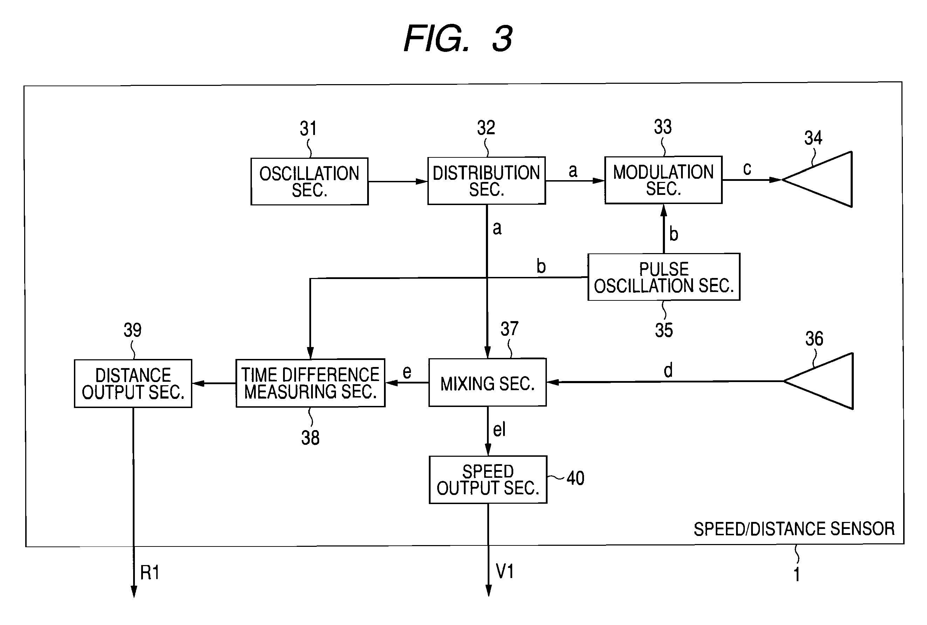

The sensor 1 detects, as a distance R1, a straight-line distance between itself and the target 3 and also detects, as a speed V1, a speed of the target 3 relative to the position of the sensor 1 itself. That is, it is sufficient for the sensor 1 to have at least a distance detecting function and a speed detecting function and no restrictions are imposed on its configuration. A specific example configuration of the sensor 1 will be described later with reference to Fig. 3.

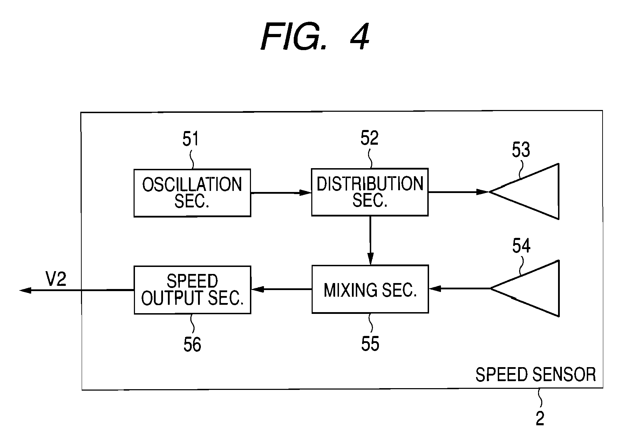

On the other hand, the sensor 2 detects, as a speed V2, a speed of the target 3 relative to the position of the sensor 2 itself. That is, it is sufficient for the sensor 2 to have at least a speed detecting function (a distance detecting function is not indispensable) and no restrictions are imposed on its configuration. A specific example configuration of the sensor 2 will be described later with reference to Fig. 4.

In the following, to emphasize the feature of each sensor, the sensors 1 and 2 will be referred to specifically as a speed/distance sensor 1 and a speed sensor 2, respectively.

It is assumed that the target 3 has a speed component V (hereinafter referred to as "approach speed V") in the direction that is perpendicular to a line segment D that connects the speed/distance sensor 1 and the speed sensor 2 and has a length L.

In this case, the detection speed V1 of the speed/distance sensor 1, the detection speed V2 of the speed sensor 2, and the approach speed V have a relation of Equation (1) :

$$V1/SIN\ \theta1\ =\ V2/SIN\ \theta2\ =\ V\quad \cdots\ (1)$$

In Equation (1) , θ1 is the angle formed by the line segment D and the line segment that connects the speed/distance sensor 1 and the target 3, that is, the line segment having a distance R1 in Fig. 1. Parameter θ2 is the angle formed by the line segment D and the line segment that connects the speed sensor 2 and the target 3, that is, the line segment having a distance R2 in Fig. 1.

From the relationship of Equation (1), the detection speed V1 of the speed/distance sensor 1 and the detection speed V2 of the speed sensor 2 are represented by the following Equations (2) and (3), respectively:

$$V1\ =\ V\ \times\ SIN\ \theta1\quad \cdots\ (2)$$

$$V2\ =\ V\ \times\ SIN\ \theta2\quad \cdots\ (3)$$

Furthermore, a relationship of the following Equation (4) can be derived from Equations (2) and (3):

$$V1:V2\ =\ SIN\ \theta1:SIN\ \theta2\quad \cdots\ (4)$$

As shown in Fig. 1, let the length (distance) of a perpendicular from the target 3 to the line segment D be represented by R and the straight-line distance between the target 3 and the speed sensor 2 be represented by R2; then, relationships of the following Equations (5) and (6) hold:

$$SIN\ \theta1\ =\ R/R1\quad \cdots\ (5)$$

$$SIN\ \theta2\ =\ R/R2\quad \cdots\ (6)$$

Furthermore, a relationship of the following Equation (7) is derived from Equations (5) and (6):

$$(1/R1):(1/R2)\ =\ SIN\ \theta1:SIN\ \theta2\quad \cdots\ (7)$$

Therefore, it is seen from Equations (4) and (7) that a relationship of the following Equation (8) holds:

$$V1:V2 = (1/R1):(1/R2) \quad \cdots \quad (8)$$

Equation (8) can be modified into the following Equation (9) :

$$V1/V2 = (1/R1)/(1/R2) = R2/R1$$

$$\therefore R2 = R1 \times (V1/V2) \quad \cdots \quad (9)$$

Equation (9) means that the distance R2 can be determined as long as the speed sensor 2 has the speed detecting function for detecting the speed V2 (even if it does not have the distance detecting function for detecting the distance R2) , by combining the speed V2 with the detection distance R1 and the detection speed V1 of the speed/ distance sensor 1.

Once the distances R1 and R2 are obtained in the above manner, the direction of the target 3 can be determined by the following technique.

For example, as shown in Fig. 1, the intersecting point of the line segment D and the perpendicular from the target 3 to the line segment D is denoted by P, the distance from the speed/distance sensor 1 to point P is represented by X1, and the distance from the speed sensor 2 to point P is represented by X2.

In this case, the following Equations (10)-(13) can be derived according to Pythagoras' theorem etc.:

$$R1^2 = R^2 + X1^2 \quad \cdots \quad (10)$$

$$R2^2 = R^2 + X2^2 \quad \cdots \quad (11)$$

$$L = X1 + X2 \quad \cdots \quad (12)$$

$$X1 = L - X2 \quad \cdots \quad (13)$$

Rearranging Equations (10)-(13), the following Equations (14) and (15) are obtained:

$$X2 = (-R1^2 + R2^2 + L^2)/2L \quad \cdots \quad (14)$$

$$X1 = (R1^2 - R2^2 + L^2)/2L \quad \cdots \quad (15)$$

Now, for example, as shown in Fig. 1, the middle point of the line segment D is denoted by N, the distance from the target 3 to the middle point N is represented by RR, the angle formed by the line segment D and the line segment connecting the target 3 and the middle point N, that is, the line segment having the distance RR, is represented by θ3, and the distance from point N to point P is represented by X.

In this case, the distance X is given by the following Equation (16):

$$X = X1 - L/2 \quad \cdots \quad (16)$$

In Equation (16), it is assumed that the middle point N is the origin and the leftward direction in Fig. 1 is the minus direction.

In this case, the angle θ3 is given by the following Equation (17):

$$\theta3 \ = \ TAN^{-1}(R/X) \quad \cdots \ (17)$$

In Equation (17), R represents the length of the perpendicular from the target 3 to the line segment D and is given by the following Equation (18) or (19) according to Pythagoras' theorem:

$$R \ = \ \sqrt{(R1^2 \ - \ X1^2)} \quad \cdots \ (18)$$

$$R \ = \ \sqrt{(R2^2 \ - \ X2^2)} \quad \cdots \ (19)$$

It is understood from the above discussion that if the detection speed V1 and the detection distance R1 of the speed/distance sensor 1 and the detection speed V2 of the speed sensor 2 are obtained, the angle θ3 can be determined, that is, the angle θ3 can be detected as the direction of the target 3, by calculating the above-mentioned Equations (9) and (15)-(19) using these three values as parameter values.

Where the speed/distance sensor 1 and the speed sensor 2 are installed on the front bumper of an automobile so as to be symmetrical in the horizontal direction of an automobile, the angle θ3 can be calculated as an angle at a center portion of the automobile and hence may become data that is suitable for control of the automobile.

What is more, the technique of determining the angle θ3 according to the above Equations (1) - (19) is just an example. When the detection speed V1 and the detection distance R1 of the speed/distance sensor 1 and the detection speed V2 of the speed sensor 2 are obtained, the angle θ3 may be determined by another method which uses these three detection values as parameter values.

The angles θ1 and θ2 may be determined by applying the law of cosines to the calculation distance R2 calculated according to Equation (9), the measurement distance R1, and the distance L (sensor interval).

That is, the technique of the invention is a technique for detecting the direction of a target by a prescribed set of operations which uses, as parameter values, the detection speed V1 and the detection distance R1 of the speed/ distance sensor 1 and the detection speed V2 of the speed sensor 2. The prescribed set of operations is not restricted to a particular one; any set of operation can be used as long as it uses the detection speed V1, the detection distance R1, and the detection speed V2 as parameter values. One example set of operations is the above Equations (1)-(19). Resultingly, the angle θ3 is calculated as the direction of the target.

The above set of operations is expressed as follows in the form of a technical concept.

Assume a triangle having the sensors 1 and 2 and the target 3 as apices. The distance R2 is calculated by using equations representing relationships between angles of the triangle and the lengths of its sides which are expressed by using theorems and formulae of trigonometry and trigonometric functions and derived equations and detection information, that is, the detection speeds V1 and V2 and the detection distance R1.

The angle θ3 which is formed by the line segment D and the line segment connecting the target 3 and the middle point of the line segment D is calculated as the direction of the target 3 by using the detection distance R1, the calculation distance R2, and equations representing relationships between angles of the triangle and the lengths of its sides. The expression form of the direction of the target 3 and the elements used for calculation are not limited to the ones of the above example. For example, either angles of the triangle or new angles and sides produced by drawing an additional line on the triangle may be used.

The distance RR is given by the following Equation (20) :

$$RR \ = \ \sqrt{(R^2 \ + \ X^2)} \quad \cdots \ (20)$$

Therefore, if three parameter values such as the detection speed V1 and the detection distance R1 of the speed/distance sensor 1 and the detection speed V2 of the speed sensor 2 are obtained, the distance RR can be determined by using the above Equation (20) and the distance R can be determined by using the above Equation (18) or (19). In this case, it is possible to output the distance R or RR as the distance of the target 3.

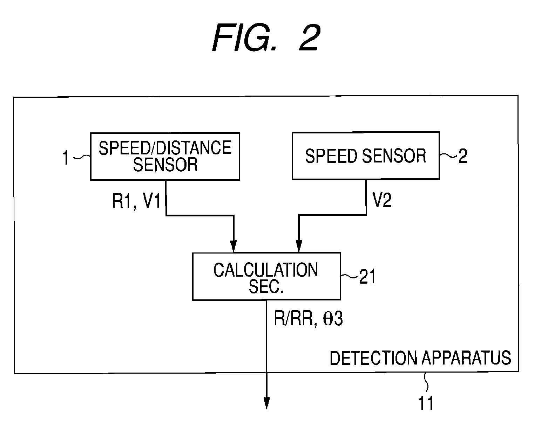

Fig. 2 shows an embodiment of a detection apparatus to which the technique of the invention which have been described above with reference to Fig. 1 is applied. That is, Fig. 2 is a block diagram showing an example configuration of a detection apparatus to which the invention is applied.

The example detection apparatus 11 of Fig. 2 is configured so as to include a calculation section 21 in addition to the above-described speed/distance sensor 1 and the speed sensor 2.

Figs. 3-5 are block diagrams showing detailed example configurations of the speed/distance sensor 1, the speed sensor 2, and the calculation section 21, respectively.

The example speed/distance sensor 1 of Fig. 3 is configured so as to include an oscillation section 31 to a speed output section 40.

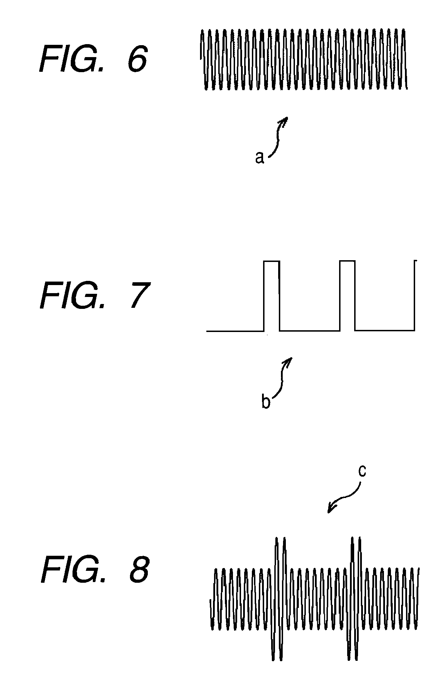

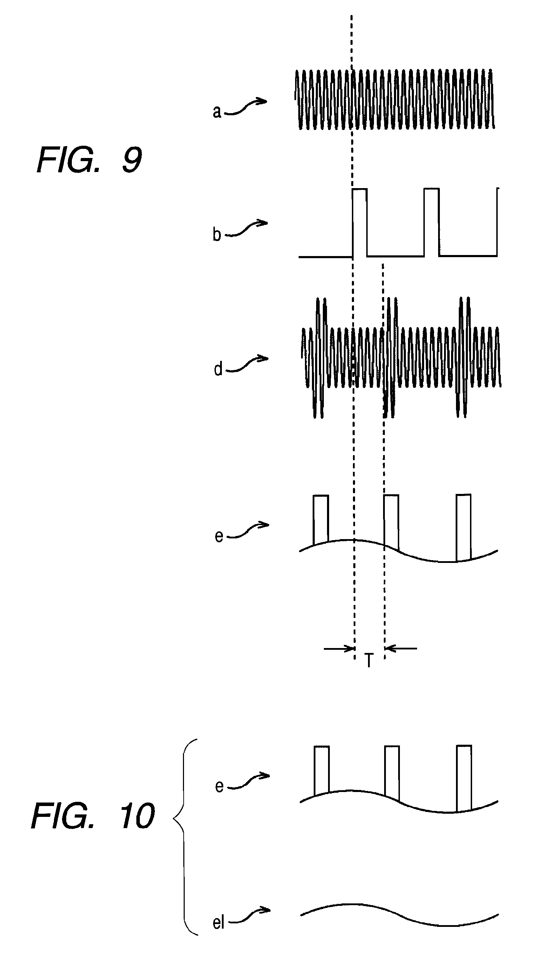

An output signal of the oscillation section 31 is supplied to a distribution section 32. Output signals **a** (see Fig. 6) of the distribution section 32 are supplied to a modulation section 33 and a mixing section 37, respectively. An output signal **c** (see Fig. 8) of the modulation section 33 is supplied to a transmission section 34. Output signals **b** (see Fig. 7) of a pulse oscillation section 35 are supplied to the modulation section 33 and a time difference measuring section 38, respectively. An output signal **d** (see Fig. 9) of a reception section 36 is supplied to the mixing section 37. As described later in detail, the output signal **d** of the reception section 36 is mixed with the output signal **a** of the distribution section 32 in the mixing section 37, and a resulting mixture signal **e** (see Figs. 9 and 10) is supplied to the time difference measuring section 38. Furthermore, a low-frequency component is extracted from the mixture signal **e** and a resulting signal e1 (see Fig. 10) is supplied to the speed output section 40. The speed output section 40 outputs a detection speed V1. On the other hand, a distance output section 39 outputs a detection distance R1.

The details (e.g., functions) of the oscillation section 31 to the speed output section 40 will be described together with the operation of the speed/distance sensor 1 which will be described later.

The example speed sensor 2 of Fig. 4 is configured so as to include an oscillation section 51 to a speed output section 56.

An output signal of the oscillation section 51 is supplied to a distribution section 52. Output signals of the distribution section 52 are supplied to a transmission section 53 and a mixing section 55, respectively. An output signal of a reception section 54 is supplied to the mixing section 55. An output signal of the mixing section 55 is supplied to the speed output section 56. The speed output section 56 outputs a detection speed V2.

The details (e.g., functions) of the oscillation section 51 to the speed output section 56 will be described together with the operation of the speed sensor 2 which will be described later.

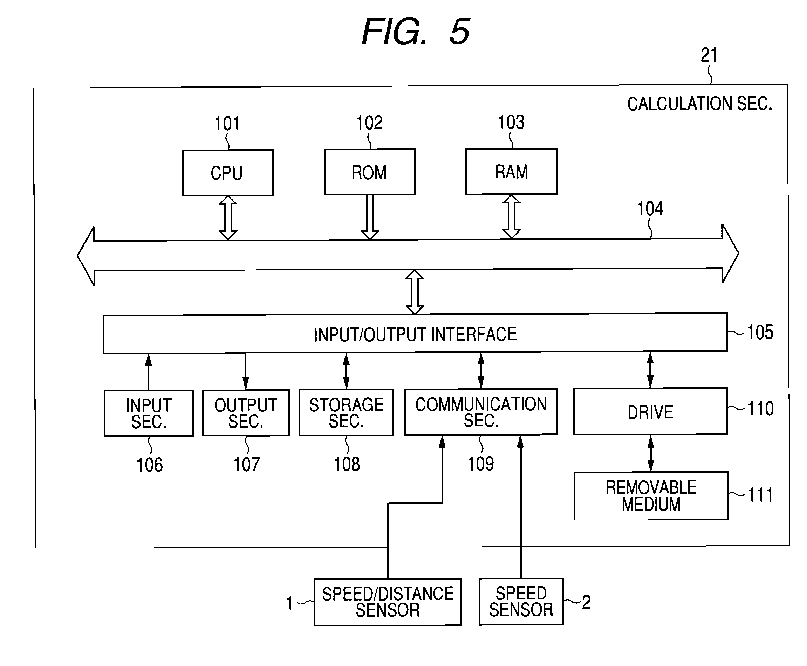

The example calculation section 21 of Fig. 5 is configured as a personal computer.

Referring to Fig. 5, a CPU (central processing unit) 101 performs various kinds of processing according to programs recorded in a ROM (read-only memory) 102 or programs that have been loaded into a RAM (random access memory) 103 from a storage section 108. Data etc. that are necessary when the CPU 101 performs various kinds of processing are also stored in the RAM 103 when necessary.

The CPU 101, the ROM 102, and the RAM 103 are connected to each other via a bus 104. An input/output interface 105 is also connected to the bus 104.

An input section 106 which consists of a keyboard, a mouse, etc., an output section 107 which consists of a display etc., the storage section 108 which consists of a hard disk etc., and a communication section 109 which consists of a modem, a terminal adaptor, etc. are connected to the input/output interface 105.

In this embodiment, for example, the communication section 109 receives a detection speed V1 and a detection distance R1 of the speed/distance sensor 1 and a detection speed V2 of the speed sensor 2 and supplies them to the CPU 101 etc.

Although not shown in any drawing, the communication section 109 can control a communication which is performed with another apparatus over a network including the Internet. That is, an angle θ3 etc. as detection results of the calculation section 21 may be output from either the output section 107 or the communication section 109.

If necessary, a drive 110 is connected to the input/output interface 105. A removable recording medium such as a magnetic disk, an optical disc, a magneto-optical disc, or a semiconductor memory is mounted in the drive 110 when necessary, and a computer program read from it is installed in the storage section 108 if necessary.

Although in the example of Fig. 5 the calculation section 21 is a personal computer, it is not limited to the example of Fig. 5. For example, where the detection apparatus 11 is mounted on an automobile or the like, the calculation section 21 may be a microcomputer, a dedicated hardware circuit, or the like for the purpose of miniaturization.

Next, an example operation of the detection apparatus 11 having the configuration of Figs. 2-5 will be described.

As shown in Fig. 2, whereas the speed/distance sensor 1 supplies a detection speed V1 and a detection distance R1 to the calculation section 21, the speed sensor 2 supplies a detection speed V2 to the calculation section 21.

In response, the calculation section 21 determines an angle θ3 and a distance R or RR by performing prescribed operations using the detection speed V1 and the detection distance R1 of the speed/distance sensor 1 and the detection speed V2 of the speed sensor 2 as parameter values. Then, the calculation section 21 outputs the angle θ3 as a direction of the target 3 on the basis of trigonometry or trigonometric functions and outputs the distance R or RR as a distance of the target 3.

More specifically, the calculation section 21 determines a distance R2 by calculating the above-mentioned Equation (9) by substituting the detection speed V1, the detection distance R1, and the detection speed V2 (parameter values) into it.

Then, the calculation section 21 determines distances X1, X2, and R by calculating Equations (14), (15), (18), etc. by substituting the determined distance R2 and the detection distance R1 into them.

Then, the calculation section 21 determines a distance X by calculating Equation (16) by substituting the distance X1 into it, and determines an angle θ3 and a distance RR by calculating the above-mentioned Equations (17) and (20) by substituting the distance X and the above-mentioned distance R into them.

Example operations of the speed sensor 2 and the speed/distance sensor 1 will be described below in detail in this order.

First, an example operation of the speed sensor 2 of Fig. 4 will be described in detail.

For example, the oscillation section 51 generates, through oscillation, signals $E_t$ which are represented by the following Equation (21) and supplies it to the distributor 52:

$$E_t = e_t \cdot Cos(2\pi ft + \phi 0) \quad \cdots (21)$$

In Equation (21), $e_t$ is the amplitude, f is the carrier frequency, and $\phi 0$ is a prescribed phase.

The signals $E_t$ are distributed by the distribution section 52 and supplied to the transmission section 53 and the mixing section 55, respectively. The signal $E_t$ supplied to the transmission section 53 is radiated as a radio wave, which is reflected by the target 3 shown in Fig. 1. A resulting reflection signal is received by the reception section 54 and supplied to the mixing section 55.

Now, let the reception signal in the reception section 54 be denoted by $E_r$. The reception signal $E_r$ is given by Equation (22):

$$E_r = e_r \cdot Cos(2\pi(f + fd)t + \phi 1) \quad \cdots (22)$$

In Equation (22), $e_r$ is the amplitude, fd is the Doppler frequency, and $\phi 1$ is a prescribed phase.

The Doppler frequency fd is given by the following Equation (23):

$$fd = 2 \times f \times (v/C) \quad \cdots (23)$$

In Equation (23), C is the propagation speed of electromagnetic waves and is equal to the speed of light and v is the speed of the target 3. For discrimination from the approach speed V shown in Fig. 1, the small letter v is used in Equation (23).

For example, where the speed sensor 2 uses radio waves, the carrier frequency f is 30 GHz, and the movement speed v is 1 m/s, the Doppler frequency fd becomes 200 Hz as seen from the following Equation (24):

$$fd = 2 \times 30 \times 10^9 \times (1/(3 \times 10^8)) = 200 \text{ Hz} \quad \cdots (24)$$

The mixing section 55 mixes the reception signal $E_r$ supplied from the reception section 54 with the signal $E_t$ supplied from the distribution section 52, that is, the transmission signal $E_t$, and supplies a resulting mixture signal to the speed output section 56.

Now, assume that the mixing circuit 55 is configured as a circuit whose input/output characteristic is a square characteristic and let the mixture signal be denoted by Emix, the mixture signal Emix is given by the following Equation (25) :

$$Emix = (E_t + E_r)^2$$

$$=(1/2)(e_t{}^2 + e_r{}^2 + e_t\cos 2(2\pi ft + \phi 0) + e_r\cos 2(2\pi (f + fd)t + \phi 1))$$

$$+ e_t e_r(\cos(2\pi fdt + \Delta\phi) - \sin(2\pi ft + \phi 0)\sin(2\pi (f + fd)t + \phi 1))$$

$$\cdots (25)$$

Where the mixing section 55 is equipped with a filter or the like for extracting a low-frequency component from the above Equation (25), a mixture signal Emix obtained by extracting a low-frequency component by the filter, more specifically, a mixture signal Emix given by the following Equation (26), is output:

$$Emix = (1/2)(e_t{}^2 + e_r{}^2) + e_t e_r\cos(2\pi fdt + \Delta\phi) \quad \cdots (26)$$

As is apparent from Equation (26), the mixture signal Emix obtained by extracting the low-frequency component is an electrical signal whose frequency is equal to the Doppler frequency fd.

Therefore, the speed output section 56 detects the Doppler frequency fd by measuring the frequency of the mixture signal Emix obtained by extracting the low-frequency component, determines the speed v through a backward calculation by substituting the Doppler frequency fd into the above Equation (23), and outputs the speed v as a detection speed V2.

The technique for measuring the frequency of a mixture signal Emix in the speed output section 56 is not restricted to a particular one. For example, a technique of counting the number of amplitude variations in a prescribed time or a technique of measuring a signal cycle and employing its reciprocal as a frequency may be employed.

The example operation of the speed sensor 2 of Fig. 4 has been described above in detail. Next, an example operation of the speed/distance sensor 1 of Fig. 3 will be described in detail.

In this embodiment, as an example, it is assumed that the oscillation section 31 generates a microwave through oscillation.

The microwave is distributed by the distribution section 32 and supplied to the modulation section 33 and the mixing section 37 as output signals **a** which are, for example, in the form shown in Fig. 6.

The pulse oscillation section 35 generates, through oscillation, pulse signals which are, for example, in the form shown in Fig. 7, and supplies them to the modulation section 33 and the time difference measuring section 38 as output signals **b.**

The modulation section 33 modules the output signal **a** of the distribution section 32 according to the output signal **b** of the pulse oscillation section 35, and supplies a resulting modulation signal, for example, an amplitude-modulated modulation signal shown in Fig. 8, to the transmission section 34 as an output signal **c.** The output signal **c** of the modulation section 33 is radiated from the transmission section 34 as a radio wave. In the following, the output signal **c** of the modulation section 33 will be referred to as a transmission signal **c.** The transmission signal **c** is reflected by the target 3 shown in Fig. 1, and a resulting reflection signal is received by the reception section 36 and supplied to the mixing section 37 as a reception signal **d.**

In this case, let T represent an elapsed time from the transmission of a transmission signal **a** from the speed/distance sensor 1 to the reception, by the speed/distance sensor 1, of a reflection signal produced by the target 3 through reflection. Then, since the propagation speed of radio waves is equal to the speed C of light, the elapsed time T is given by the following Equation (27):

$$T = 2R1/C \quad \cdots (27)$$

That is, the reflection signal received by the speed/distance sensor 1, that is, the reception signal **d** that is output from the reception section 36, is a signal that is equivalent to a signal that was emitted at a time that precedes the present time by the elapsed time T. More specifically, for example, the reception signal **d** is in the form shown in Fig. 9.

In this case, the mixing section 37 mixes the reception signal **d** supplied from the reception section 36 with the transmission signal **a** supplied from the distribution section 32 and supplies a resulting mixture signal which is in the form shown in Fig. 9 to the time difference measuring section 38 as an output signal **e.**

The time difference measuring section 38 compares the individual pulses of the output signal **b** of the pulse oscillation section 35 with those of the output signal **e** of the mixing section 37, and thereby measures a time difference T between them, that is, an elapsed time T which is given by Equation (27). The time difference measuring section 38 communicates the measurement result to the distance output section 39.

The distance output section 39 determines a detection distance R1 by performing a backward calculation by substituting the time T communicated from the time difference measuring section 38 into Equation (27). That is, the distance output section 39 determines a detection distance R1 by substituting the time T into the following Equation (28). The distance output section 39 outputs the detection distance R1.

$$R1 = (C \times T)/2 \quad \cdots \quad (28)$$

Where the target 3 has a speed, the reception signal **d** should have received a Doppler shift according to the speed. This Doppler component appears as a low-frequency component of the mixture signal **e** of the transmission signal **a** and the reception signal **d,** that is, the mixture signal **e** which is supplied from the mixing section 37 to the time difference measuring section 38. The principle of this operation is the same as that of the above-described operation of the mixing section 55 of the speed sensor 2 of Fig. 4.

Therefore, where the mixing section 37 is equipped with a filter or the like for extracting a low-frequency component from a mixture signal **e**, a mixture signal e1 obtained by extracting a low-frequency component by the filter, more specifically, a mixture signal e1 that is, for example, in the form shown in Fig. 10, is output. That is, the mixture signal e1 is an electrical signal whose frequency is equal to a Doppler frequency fd.

Therefore, like the speed output section 56 shown in Fig. 4, the speed output section 40 shown in Fig. 3 detects a Doppler frequency fd by measuring a frequency of the mixture signal e1, determines a speed v through a backward calculation by substituting the Doppler frequency fed into the above-mentioned Equation (23), and outputs the speed v as a detection speed V1.

The example operations of the speed sensor 2 of Fig. 4 and the speed/distance sensor 1 of Fig. 3 have been described above in detail.

Now, the detection apparatus 11 of Fig. 2 to which the invention is applied (hereinafter referred to simply as "detection apparatus 11 of the invention") will be compared with the conventional detection apparatus of the above-described Patent Document 1 (hereinafter referred to simply as "conventional detection apparatus").

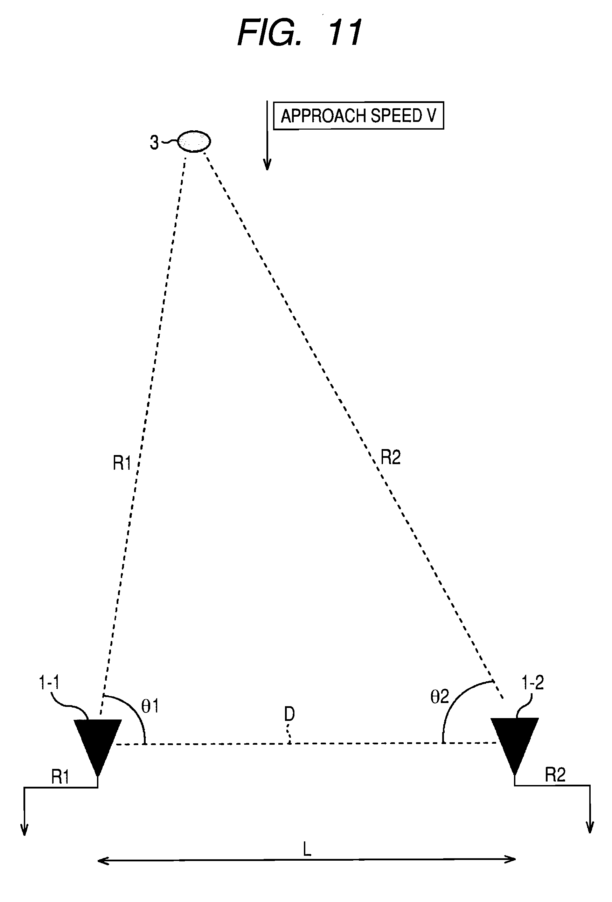

Fig. 11 illustrates a direction detecting technique of the conventional apparatus. As shown in Fig. 11, the conventional detection apparatus, which is equipped with transmission/reception circuits 1-1 and 1-2, calculates an angle as a direction of a target 3 using a detection distance R1 between the transmission/reception circuit 1-1 and the target 3 and a detection distance R2 between the transmission/reception circuit 1-2 and the target 3. In other words, the direction detecting technique of the conventional apparatus is a technique of calculating an angle on the basis of distances R1 and R2 of the target 3 detected by respective distance sensors using the two transmission/reception circuits 1-1 and 1-2.

One difference between the detection apparatus 11 of the invention and the conventional detection apparatus is that the former is configured so as to include one speed/distance sensor 1 and one speed sensor 2 whereas the latter is configured so as to include two distance sensors. That is, one difference is that the detection apparatus 11 of the invention is equipped with the speed sensor 2 in place of the distance sensor because it does not require the function of detecting the distance R2 which is necessary in the conventional detection apparatus.

In general, distance sensors have features that they are more complex in configuration and hence higher is cost than speed sensors. Therefore, the detection apparatus 11 of the invention can be constructed more simply at a lower cost than the conventional detection apparatus because the former can incorporate the speed sensor 2 in place of the transmission/reception circuit 1-2 which functions as a distance sensor.

Distance sensors which measure a distance of a target by sending radio waves in the form of pulses and measuring times taken by the pulses to be received after being reflected by the target as in the case of the detection apparatus of Patent Document 1 have a problem that the direction of the target cannot be detected correctly unless the distance measurement resolution is set higher than a certain value. This problem will be described below by using a specific, numerical example.

For example, the distance resolution of the conventional detection apparatus is determined by the width of pulses generated by the pulse oscillation section 35 shown in Fig. 3. Although the distance resolution can be increased by decreasing the pulse width, it increases the bandwidth occupied by radiation such as radio waves emitted from the transmission section 34.

Where radio waves are used as a medium, a signal having a wide bandwidth may disturb nearby radio stations.

Therefore, the bandwidth is restricted strictly by law. To cause the bandwidth (BW) to fall within a numerical range of a law, the pulse width (PW) of a signal generated by the pulse oscillation section is generally restricted by the following Inequality (29) :

$$PW > 1.2/BW \quad \cdots \quad (29)$$

For example, in the "mobile detection sensor" (i.e., a sensor which is used for acquiring, with high accuracy, information (the presence, position, movement, size, or the like of a target) mainly of a moving person or object to recognize its situation) which is prescribed in the Radio Law, Enforcement Regulations, Article 6, Paragraph 4 and the Ministry of Posts and Telecommunications, Notice No. 42 dated January 27, 1989, the occupation frequency bandwidth is restricted to 40 or 76 MHz.

For example, where the regulatory value 76 MHz is used, the following calculation is made: PW > 1.2/(76 MHz) ≈ 15.8 ns.

The relationship between the distance resolution $\Delta R$ and the pulse width of the conventional detection apparatus is given by the following Inequality (30). In Inequality (30), C is the speed of light.

$$\Delta R \geq PW \times C/2 \quad \cdots \quad (30)$$

Therefore, since the pulse width PW is about 15.8 ns, the distance resolution is calculated as $\Delta R \geq 2.4$ m. That is, the restriction that the resolution value cannot be made smaller than 2.4 m is imposed.

Although the law-restricted numerical value of the occupation bandwidth varies from one country to another, it is a universal notion that to avoid disturbing other radio stations or to use radio waves effectively the occupation bandwidth be as narrow as possible.

As described above, the speed sensor 2 detects a speed from a Doppler shift. Therefore, as is apparent from the above-described equations, the speed sensor 2 receives no restrictions relating to the bandwidth, that is, it can increase the speed detection resolution even in the case where radio waves having a narrow bandwidth are used.

For example, where the speed sensor 2 is a radar sensor using radio waves whose carrier frequency is 30 GHz, when the movement speed v of the target 3 is 1 m/s, the Doppler frequency fd is equal to 200 Hz (see the above-mentioned Equation (24)) .

If the movement speed v of the target 3 is 1.01 m/s (1% faster), the Doppler frequency fd is likewise calculated as 202 Hz by using the above-mentioned Equation (23).

As described above, the speed output section 56 shown in Fig. 4 calculates a speed V2 by measuring a frequency of an output signal of the mixing section 55, that is, a Doppler frequency fd. In many cases, it employs, as a frequency measuring technique, one of a technique of counting the number of amplitude variations in a prescribed time and a technique of measuring a signal cycle and employing its reciprocal.

For example, to discriminate between Doppler frequencies fd of 200 Hz and 202 Hz (mentioned above), if the amplitude variation counting technique is employed, the speed output section 56 encounters 200 amplitude variations per second in the former case and 202 amplitude variations per second in the latter case. Each frequency can be measured by counting such amplitude variations.

If the cycle measuring technique is employed, the speed output section 56 detects a cycle 5 ms in the case of 200 Hz and a cycle 4.95 ms in the case of 202 Hz. Therefore, resolution that is necessary for discrimination between the two frequencies if a measuring method whose cycle measurement resolution value is 0.05 ms or less is employed. More specifically, the speed output section 56 ends up doing measurements at a cycle resolution corresponding to 20 kHz or more. Even more specifically, for example, in the speed output section 56, a counter that operates at a frequency of 20 kHz or more is activated by using, as a trigger, a rising edge of a signal whose frequency is to be measured (in the example of Fig. 4, an output signal of the mixing section 55) and the counter is stopped at the next rising edge. The speed output section 56 can calculate a cycle of the measurement subject signal by multiplying the resulting count value by the reciprocal of the operating frequency of the counter.

In the case of the technique of counting amplitude variations, the frequency resolution can be increased by elongating the counting time. On the other hand, in the case of the technique of measuring a cycle, the frequency resolution can be increased by using a time-measuring counter that has a small cycle resolution value, that is, operates at high speed.

Therefore, whichever technique is employed, the speed sensor 2 can increase the frequency resolution, that is, the speed resolution, without causing no influence on the bandwidth of radio waves emitted from the transmission section 53.

In other words, detecting a direction using the detection apparatus 11 of the invention which uses the speed sensor 2 which is not influenced by the bandwidth is suitable in terms of both of resolution and simplicity. That is, even with a strict occupation bandwidth restriction, the detection apparatus 11 of the invention which has a simpler configuration than in the conventional case makes it possible to detect a direction of the target 3 easily.

What is more, the example detection apparatus 11 of Fig. 2 has the speed/distance sensor 1 for easy comparison with the conventional detection apparatus of Fig. 11. However, as described above, it suffices that as shown in Fig. 1 the detection apparatus to which the invention is applied detect at least a distance R1 and speeds V1 and V2 of the object 3 and detect a direction of the object 3 using these detection results as parameter values. There are no restrictions on its configuration.

More specifically, for example, as shown in Fig. 12, a detection apparatus that separately incorporates a speed sensor 151 for detecting only a speed V1 and a distance sensor 152 for detecting only a distance R1 in place of the speed/distance sensor 1 of the example detection apparatus 11 of Fig. 2 is another embodiment of the detection apparatus to which the invention is applied. Where the distance sensor 152 is of such a type as not to use radio waves, for example, where it uses laser light, it is free of the above-mentioned occupation bandwidth restriction and hence is capable of angle/azimuth detection of higher accuracy.

In the examples of Figs. 1 and 12, the detection range of the direction of the target 3 is in a two-dimensional plane. The detection range can be expanded to a three-dimensional range by preparing one or more sensors similar to the speed sensor 2 and disposing them at locations that are not in the above two-dimensional plane.

Incidentally, the above-described series of steps, for example, the process of the calculation section 21, may be executed by either software or hardware. That is, in the above-described example, since the calculation section 21 is the computer having the configuration of Fig. 5, the process is executed by software. However, the configuration of the calculation section 21 is not limited to the above-described example of Fig. 5. The calculation section 21 may be either a microcomputer which enables execution by software or a hardware circuit.

Where the above-described series of steps are executed by software, programs constituting the software are installed, via a network or from a recording medium, in a computer incorporated in dedicated hardware or, for example, a general-purpose personal computer capable of performing various functions when various programs are installed therein.

For example, as shown in Fig. 5, the recording medium containing such programs is the program-recorded removable medium (package medium) 111 which is separate from the apparatus main body and is distributed to provide users with the programs, such as a magnetic disk (including a floppy disk), an optical disc (including a CD-ROM (compact disc-read only memory) and a DVD (digital versatile disk), a magneto-optical disc (including an MD (mini-disk)), or a semiconductor memory or the program-recorded ROM 102 or hard disk of the storage section 108 which is provided to the user in a state that it is incorporated in the apparatus main body in advance.

In the specification, the steps that describe a program recorded in a recording medium include not only steps that are executed in time-series order in order of its arrangement but also steps that are not necessarily executed in time-series order, that is, steps that are executed in parallel or individually.

## Claims

1. A detection apparatus for detecting a target, **characterized by** comprising:

    first speed detecting means for detecting, as a first speed, a relative speed of the target with respect to a first position;
    second speed detecting means for detecting, as a second speed, a relative speed of the target with respect to a second position;
    distance detecting means for detecting a distance between the first position and the target; and
    direction detecting means for detecting a direction of the target with respect to the detection apparatus using trigonometry or trigonometric functions and parameter values that are the first speed detected by the first speed detecting means, the second speed detected by the second speed detecting means, and the distance detected by the distance detecting means.

2. The detection apparatus according to claim 1, wherein the direction detecting means detects, as the direction of the target, an angle formed by a first line segment connecting the first position and the second position and a second line segment connecting the target and a middle point of the first line segment.

3. The detection apparatus according to claim 2, wherein the direction detecting means further detects, as a distance between the detection apparatus and the target, a length of a perpendicular from the target to the first line segment or a length of the second line segment.

4. The detection apparatus according to claim 1, wherein the first speed detecting means and the distance detecting means are one radar sensor and the second speed detecting means is another radar sensor.

5. A detection method of a detection apparatus for detecting a target, **characterized by** comprising the steps of:

   detecting, as a first speed, a relative speed of the target with respect to a first position;
   detecting, as a second speed, a relative speed of the target with respect to a second position;
   detecting a distance between the first position and the target; and
   detecting a direction of the target with respect to the detection apparatus using trigonometry or trigonometric functions and parameter values that are the detected first speed, the detected second speed, and the detected distance.

# FIG. 1

APPROACH SPEED V

# FIG. 2

```
┌─────────────────────────────────────────────────────────────┐
│                                                               │
│   ┌──────────────────┐        ┌──────────────────┐           │
│  1│  SPEED/DISTANCE  │        │   SPEED SENSOR   │2           │
│   │     SENSOR       │        │                  │            │
│   └──────────────────┘        └──────────────────┘           │
│       R1, V1                        V2                        │
│                                                               │
│              ┌──────────────────┐                            │
│              │   CALCULATION    │21                           │
│              │      SEC.        │                             │
│              └──────────────────┘                            │
│                   R/RR, θ3                                    │
│                                                               │
│                              DETECTION APPARATUS             │
│                                          11                   │
└─────────────────────────────────────────────────────────────┘
```

## FIG. 3

EP 2 023 156 A2

# FIG. 4

# FIG. 5

21 CALCULATION SEC.

101 CPU

102 ROM

103 RAM

104

INPUT/OUTPUT INTERFACE ~105

INPUT SEC. 106

OUTPUT SEC. 107

STORAGE SEC. 108

COMMUNICATION SEC. 109

DRIVE ~110

REMOVABLE MEDIUM ~111

1~ SPEED/DISTANCE SENSOR

SPEED SENSOR ~2

EP 2 023 156 A2

**FIG. 6**

a

**FIG. 7**

b

c

**FIG. 8**

FIG. 9

a

b

d

e

T

FIG. 10

e

el

# FIG. 11

APPROACH SPEED V

3

R1

R2

1-1

θ1

D

θ2

1-2

R1

R2

L

# FIG. 12

APPROACH SPEED V

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006125947 A